**Europäisches Patentamt**

(19) **European Patent Office**

**Office européen des brevets**

(11) Numéro de publication: **0 230 798**
**B1**

(12) **FASCICULE DE BREVET EUROPEEN**

(45) Date de publication du fascicule du brevet:
25.04.90

(51) Int. Cl.⁴: **B60R 22/20**

(21) Numéro de dépôt: **86402468.2**

(22) Date de dépôt: **04.11.86**

(54) **Dispositif de renvoi latéral réglable en hauteur pour ceinture de sécurité de véhicule.**

(30) Priorité: **19.11.85 FR 8517094**

(43) Date de publication de la demande:
**05.08.87 Bulletin 87/32**

(45) Mention de la délivrance du brevet:
**25.04.90 Bulletin 90/17**

(84) Etats contractants désignés:
**DE GB IT**

(56) Documents cités:
**EP-A- 0 086 633**
**EP-A- 0 127 690**
**DE-A- 2 303 222**
**DE-A- 3 242 723**
**GB-A- 1 486 974**
**GB-A- 1 497 397**
**GB-A- 2 070 414**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Foriot, Dominique, 19, rue de la Mare, F-95300 Ennerly(FR)**

(74) Mandataire: **Bressand, Georges et al, c/o CABINET LAVOIX 2 Place d'Estienne d'Orves, F-75441 Paris Cédex 09(FR)**

ACTORUM AG

## Description

La presente invention concerne un dispositif de renvoi latéral pour ceinture de sécurité de véhicule selon le préambule de la revendication 1. Un dispositif de ce genre est montre dans le GB-A 1 486 974.

Les ceintures de sécurité de véhicule, notamment de véhicules automobiles, comportent en général trois points d'ancrage dont l'un est dispsoé au niveau de l'épaule de l'utilisateur, sur un côté du siège, constituant un renvoi latéral pour la ceinture.

Sur la plupart des véhicules, ce point d'ancrage est fixé a la carrosserie à une hauteur convenant à la majorité des utilisateurs dits de taille normale.

Toutefois, cette hauteur ne convient pas à certains utilisateurs, en particulier aux personnes de courte taille.

C'est pourquoi les constructeurs automobiles ont conçu, notamment pour équiper les véhicules de haut de gamme, des dispositifs de renvoi latéral réglables en hauteur, qui conviennent aux personnes de toutes tailles et apportent en outre un confort supplémentaire même aux personnes de taille normale qui peuvent régler exactement à leur convenance la hauteur du renvoi.

On connaît des dispositifs de renvoi latéral réglables en hauteur, comprenant une glissière fixe constituée de deux rails parallèles dont les bords comportent des créneaux, un coulisseau portant un anneau de renvoi pour la ceinture, susceptible de se déplacer longitudinalement entre les deux rails et muni de dents complémentaires desdits créneaux et des moyens élastiques permettant l'enclenchement de manière amovible des dents dans lesdits créneaux.

Toutefois, les dispositifs de renvoi réalisés jusqu'à présent sont constitués d'un assez grand nombre de pièces et leur réalisation est compliquée. Leur montage délicat oblige les fournisseurs à livrer, tout monté, l'ensemble du dispositif constitué d'une glissière contenant un coulisseau et des moyens d'enclenchement du coulisseau dans la glissière, des moyens étant prévus sur la glissière pour fixer celle-ci à la carrosserie du véhicule. Une fois l'ensemble livré, le constructeur doit encore consacrer un temps relativement long au montage de la glissière sur la carrosserie. Le prix de revient de tels renvois est par conséquent assez élevé. En outre, ces dispositifs, de part leur encombrement, ne permettent pas un réglage fin de la hauteur du renvoi.

L'invention a pour but de remédier aux inconvénients précités.

Elle a pour objet un dispositif de renvoi latéral réglable en hauteur pour ceinture de sécurité de véhicule, comprenant une glissière constituée de deux rails parallèles dont les bords comportent des créneaux, un coulisseau portant un anneau de renvoi pour la ceinture, susceptible de se déplacer longitudinalement entre les deux rails et muni de dents complémentaires desdits créneaux, et des moyens élastiques permettant l'enclenchement de manière amovible des dents dans lesdits créneaux.

Suivant l'invention, la glissière est réalisé directement dans un pilier latéral de la carrosserie du véhicule; le coulisseau étant muni de deux lames élastiques venant chacune en appui sur l'un des rails, sur une face opposée au bord portant lesdits créneaux.

Ce dispositif est simple à réaliser, d'un montage facile et rapide tant pour le fournisseur que pour le constructeur et permet un réglage fin de la hauteur dudit renvoi.

Dans un mode préféré de réalisation du dispositif de renvoi latéral selon l'invention, la glissière est réalisée dans un pilier latéral de la carrosserie du véhicule.

Les rails sont de préférence en forme de U, les lames élastiques s'appuyant sur la partie externe du fond des U et les créneaux étant réalisés sur les bords des U se faisant face.

Selon d'autres caractéristiques avantageuses de l'invention:
- les lames élastiques sont venues de matière avec la pièce de retenue;
- les moyens de fixation de la pièce de retenue sur le patin constituent également le moyen de fixation de l'anneau de renvoi sur le coulisseau;
- le patin et la pièce de retenue sont réalisés en matière plastique.

D'autres particularités et avantages de l'invention apparaîtront au cours de la description qui va suivre, faite en référence aux dessins annexés qui en illustrent un mode de réalisation à titre d'exemple non limitatif:

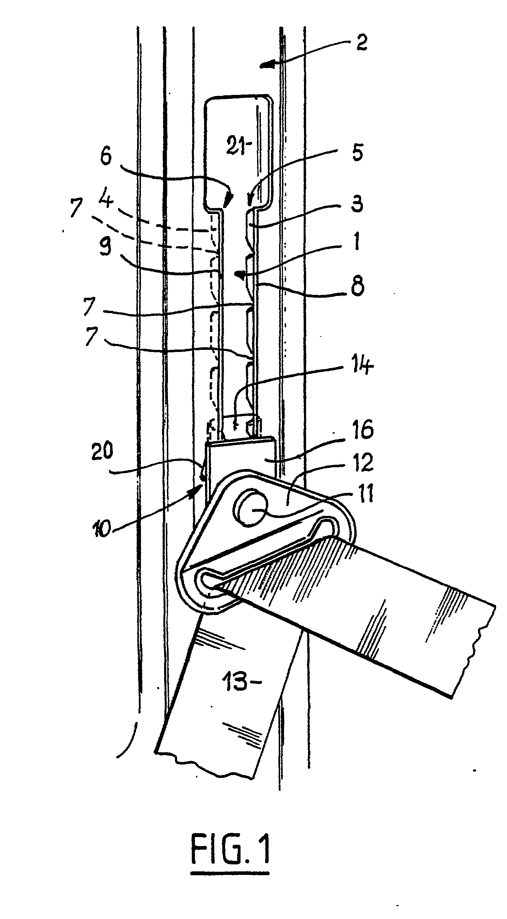

- la Figure 1 est une vue en perspective d'un dispositif de renvoi latéral pour ceinture de sécurité selon l'invention, dans lequel la glissière est réalisée dans un pilier latéral de la carrosserie du véhicule; le dispositif est représenté en position d'enclenchement des dents du coulisseau dans les créneaux de la glissière;
- la Figure 2 est une vue de dessus du dispositif de la Figure 1, dans laquelle l'anneau de renvoi n'a pas été représenté;
- la Figure 3 est une vue de côté du dispositif de la Figure 2, dans laquelle on a représenté en trait mixte la position des lames élastiques pour laquelle les dents du coulisseau sont dégagées des créneaux de la glissière;

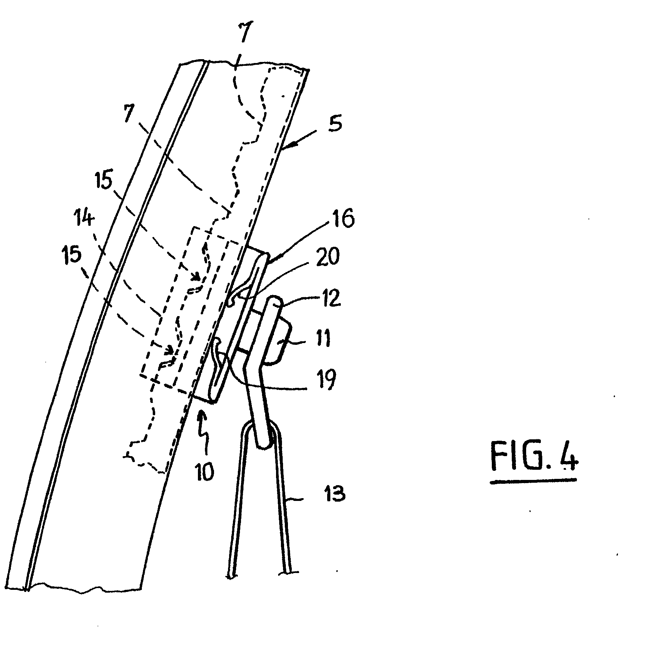

- la Figure 4 est une vue en élévation latérale du dispositif de la Figure 1.

Le dispositif représenté sur les Figures comprend une glissière 1 réalisée dans un pilier latéral 2 de la carrosserie d'un véhicule. Cette glissière 1 est constituée de deux rails 3 et 4 en forme du U; ces U comportent deux bords 5 et 6 se faisant face, dans lesquels sont réalisés des créneaux 7. Les fonds des U sont ici renforcés par des faces 8 et 9 qui servent d'appui aux lames élastiques comme cela sera decrit ci-dessous. Dans le cas particulier de l'exemple décrit, les faces 8 et 9 et les rails 3 et 4 sont realisés dans deux pièces du pilier 2 soudées entre elles, une pièce profilée en U dans laquelle ont été découpés et pliés les rails 3 et 4 et un support dont font partie les faces 8 et 9.

Un coulisseau 10 sur lequel est fixé, au moyen d'une vis 11, un anneau de renvoi 12 pour une ceinture de sécurité 13 est susceptible de se déplacer le long de la glissière 1 pour permettre le réglage en hauteur de l'anneau de renvoi 12. Ce coulisseau 10 est constitué d'un patin 14 muni de dents 15 complémentaires des créneaux 7. Chaque dent 15 comporte trois faces, une face 15a parallèle à la direction des rails 3 et 4 et deux faces obliques 15b et 15c, la face supérieure 15b étant à forte pente et la face inférieure 15c étant à faible pente.

Une pièce de retenue 16 est fixée au patin 14 au moyen de la vis 11. Dans ce but, la pièce de retenue 16 et le patin 14 sont percés d'alésages correspondants, respectivement 17, 18, l'alésage 18 étant taraudé.

La pièce de retenue 16 comporte deux lames élastiques 19 et 20 venues de matière avec elle, qui prennent appui sur les faces 8 et 9 de la glissière 1. On a représenté respectivement en trait plein et en trait mixte les positions des lames 19 et 20 pour lesquelles les dents 15 sont respectivement enclenchées dans les créneaux 7 et dégagées des créneaux 7.

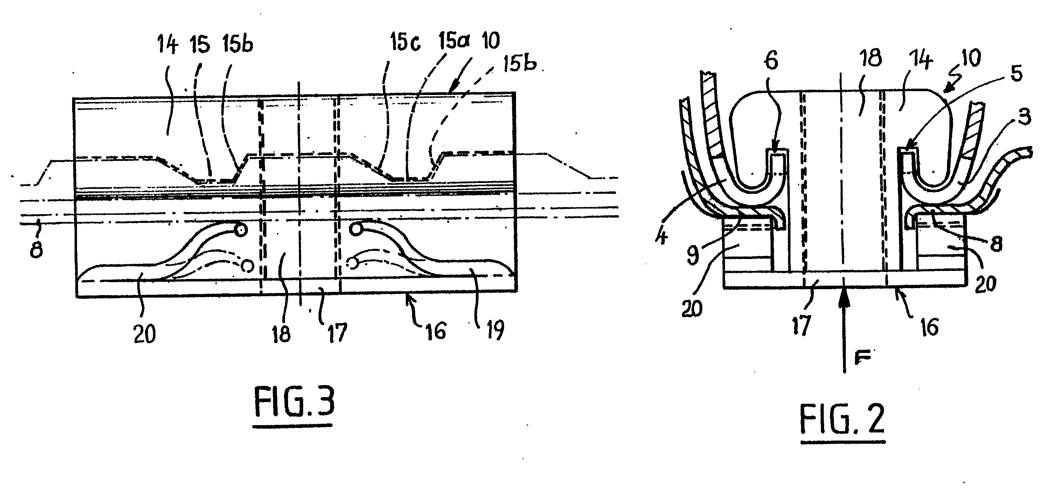

Quand un utilisateur de la ceinture 13 souhaite modifier la hauteur de l'anneau de renvoi 12, il lui suffit de faire coulisser longitudinalement la pièce de retenue 16, et par conséquent le patin 14 qui en est solidaire, jusqu'à la hauteur désirée. Pour déplacer l'anneau de renvoi 12 vers le bas, il faut préalablement dégager les dents 15 des créneaux 7 en appuyant manuellement sur la pièce de retenue 16 (flèche F, Figure 2). Pour un déplacement de l'anneau de renvoi 12 vers le haut, le dégagement des dents 15 des créneaux 7 et le coulissement de la pièce de retenue 16 se font simultanément par poussée sur la pièce 16 vers le haut, en raison de la faible pente de la face inférieure 15c. Quand l'anneau de renvoi 12 est à la hauteur désirée, l'utilisateur lâche la pièce de retenue 16, provoquant ainsi la détente des lames élastiques 19 et 20 et le réenclenchement des dents 15 dans les créneaux 7. Le dispositif de renvoi selon l'invention est donc très simple à utiliser.

Le dispositif que l'on vient de décrire présente en outre d'autres avantages:

Sa réalisation est simple: le coulisseau 10 est réalisé en matière plastique, donc par moulage. Le patin 14, la pièce de retenue 16 et l'anneau de renvoi 12 sont ensuite assemblés au moyen de la vis 11. Le fournisseur livre cet ensemble au constructeur et ce dernier n'a plus qu'à introduire le coulisseau 10 entre les deux rails 3 et 4 par une fenêtre 21 ménagée dans le pilier 2 et adjacente à la glissière 1. Le montage du dispositif est très rapide, tant pour le fournisseur que pour le constructeur.

Le dispositif décrit est fiable. Les matériaux utilisés pour le patin 14 et pour la pièce de retenue 16 sont des matières plastiques qui présentent des caractéristiques de résistance à l'usure en ce qui concerne le patin 14 et de souplesse en ce qui concerne la pièce de retenue 16. On peut choisir par exemple pour le patin 14 un polyamide chargé au bisulfure de molybdène et pour la pièce de reteue 16 un polyoxyméthylène.

Il n'y a aucun inconvénient à prévoir un espace faible entre les créneaux 7 de la glissière 1 et par conséquent entre les dents 15 du coulisseau 10 afin de permettre un réglage fin en hauteur de l'anneau de renvoi 12.

Bien entendu, l'invention n'est pas limitée au mode de réalisation qui vient d'être décrit uniquement à titre d'exemple.

Ainsi, les moyens de fixation de la pièce de retenue 16 sur le patin 14 pourraient être différents, ces deux pièces étant par exemple soudées par ultrasons.

Le patin 14 pourrait comporter un ou plusieurs évidements réalisés parallèlement à son axe afin d'alléger la pièce constituant le patin et de faciliter son démoulage.

Les faces 8 et 9 pourraient être constituées de façon plus simple, directement par les fonds des U des rails 3 et 4.

## Revendications

1. Dispositif de renvoi latéral réglable en hauteur pour ceinture de sécurité de véhicule, comprenant une glissière (1) constituée de deux rails parallèles (3, 4) dont les bords comportent des créneaux (7), un coulisseau (10) constitué d'un patin portant des dents (15) complémentaires desdits créneaux (7) et d'une pièce de retenue (16) fixée au patin, portant un anneau de renvoi (12) pour la ceinture (13), le coulissant étant susceptible de se déplacer longitudinalement entre les deux rails (3, 4), et des moyens élastiques permettant l'enclenchement de manière amovible des dents (15) dans lesdits créneaux (7), caractérisé en ce que la glissière (1) est réalisée directement dans un pilier latéral (2) de la carrosserie du véhicule, le coulisseau (10) étant muni de deux lames élastiques (19, 20) venant chacune en appui sur l'un des rails (3, 4), sur une face opposée au bord portant lesdits créneaux (7), et les rails (3, 4) sont de préférence en forme de U, les lames élastiques (19, 20) s'appuyant sur la partie externe du fond des U, et les créneaux (7) sont réalisés sur les bords des U se faisant face.

2. Dispositif selon la revendication 1, caractérisé en ce que les lames élastiques sont venues de matière avec la pièce de retenue.

3. Dispositif selon l'une des revendications 1 et 2, caractérisé en ce que les moyens (11) de fixation de la pièce de retenue (16) sur le patin (14) constituent également le moyen de fixation de l'anneau (12) de renvoi sur le coulisseau (10).

4. Dispositif selon l'une des revendications 1 à 3, caractérisé en ce que le patin (14) et la pièce de retenue (16) sont réalisés en matière plastique.

## Patentansprüche

1. Höhenverstellbarer seitlicher Umlenkbeschlag für einen Fahrzeugsicherheitsgurt, bestehend aus einer Gleitführung (1), die aus zwei zueinander parallelen Schienen (3, 4) besteht, deren Ränder Rastkerben (7) aufweisen, einem Schieber (10), der aus einer Kufe mit zu den Rastkerben (7) komplementären Zähnen (15) und einer an der Kufe befestigten Halteplatte (16), die einen Umlenkring für den Gurt (13) trägt, besteht und sich in Längsrichtung zwi-

schen den beiden Schienen (3, 4) bewegen kann, und elastischen Einrichtungen, die ein lösbares Einrasten der Zähne (15) in die Rastkerben gestatten, dadurch gekennzeichnet, daß die Gleitführung (1) direkt in einer Seitensäule (2) der Fahrzeugkarosserie ausgebildet ist, daß der Schieber (10) mit zwei elastischen Blättern (19, 20) versehen ist, die jeweils gegen eine der Schienen (3, 4) drücken, und zwar auf einer Seite, die dem mit den Rastkerben (7) versehenen Rand entgegengesetzt ist, und daß die Schienen (3, 4) vorzugsweise U-förmig sind, wobei sich die elastischen Blätter (19, 20) an der Außenseite des Bodens des U's abstützen und die Rastkerben (7) an den einander gegenüberstehenden Rändern des U's vorgesehen sind.

2. Vorrichtung nach Anspruch 1, dadurch gekennzeichnet, daß die elastischen Lamellen mit dem Halteteil aus einem Stück bestehen.

3. Vorrichtung nach einem der vorhergehenden Ansprüche, dadurch gekennzeichnet, daß die Einrichtungen (11) zur Befestigung des Halteteils (16) an der Kufe (14) auch die Einrichtung zur Befestigung des Umlenkrings (12) an dem Schieber (10) bilden.

4. Vorrichtung nach einem der vorhergehenden Ansprüche dadurch gekennzeichnet, daß die Kufe (14) und das Halteteil (16) aus Kunststoff bestehen.

**Claims**

1. Height-regulatable lateral anchoring device for a vehicle seat belt having a slide (1) constituted by two parallel rails (3, 4), whose edges have notches (7), a slider (10) constituted by a flange carrying teeth (15) complimentary with said notches (7) and a retaining part (16) fixed to the flange and carrying an anchor ring (12) for the belt (13), the slider being able to move longitudinally between the two rails (3, 4) and elastic means permitting the detachable engagement of teeth (15) in notches (7), characterized in that the slide (1) is produced directly in a lateral column (2) of the vehicle body, said slider (10) being provided with two elastic strips (19, 20), each bearing of one of the rails (3, 4), on a face opposite to the edge carrying said notches (7), the rails (3, 4) preferably being U-shaped, the elastic strips (19, 20) bearing on the outer part of the bottom of the U and the notches (7) being produced on the facing edges of the U.

2. Device according to claim 1, characterized in that the electric strips are made in one piece with the material of the retaining part.

3. Device according to one of the claims 1 and 2, characterized in that the means (11) for fixing the retaining part (16) to the flange (14) also constitute the means for fixing the anchor ring (12) to the slider (10).

4. Device according to one of the claims 1 to 3, characterized in that the flange (14) and retaining parts (16) are made from plastics.

## FIG.1

FIG.2

FIG.3

FIG.4

EP 0 230 798 B1